# EUROPEAN PATENT APPLICATION

(11) **EP 0 945 653 A1**
(43) Date of publication of application: **29.09.1999**
(21) Application number: 99105758.9
(22) Date of filing: 22.03.1999
(51) Int. Cl.: F16J 15/32

(54) **Shaft sealing device and compressor**

(30) Priority: 23.03.1998 JP 7419098
(71) Applicant: Kabushiki Kaisha Toyoda Jidoshokki Seisakusho, Kariya-shi, Aichi-ken (JP)
(72) Inventor: Kawaguchi, Masahiro, Toyoda Jidoshokki Seisakusho, Kariya-shi, Aichi-ken (JP); Takenaka, Kenji, Toyoda Jidoshokki Seisakusho, Kariya-shi, Aichi-ken (JP); Tanaka, Hirohiko, Toyoda Jidoshokki Seisakusho, Kariya-shi, Aichi-ken (JP); Kimura, Kazuya, Toyoda Jidoshokki Seisakusho, Kariya-shi, Aichi-ken (JP)
(74) Representative: Pellmann, Hans-Bernd, Dipl.-Ing.

(57) **Abstract**

A shaft seal (33) is installed on the circumferential surface (!32)of a drive shaft (13). A first lip ring (38) made of rubber and a second lip ring (39) made of fluororesin are urged toward the drive shaft (33) to prevent leakage of fluid along the circumferential surface of the drive shaft (13). Each lip has a contact portion (381, 391) facing the circumferential surface of the drive shaft (33). A solid lubricant layer (42, 43) is provided on the contact portions (381, 391) to reduce friction and to extend the life of the seal (33). The solid lubricant may also be formed on the surface of the drive shaft (13).

## Description

### BACKGROUND OF THE INVENTION

The present invention relates to a compressor having a shaft seal for preventing leakage of fluid along a circumferential surface of a rotation shaft.

Japanese Unexamined Patent Publication No. 7-139633 describes shaft seal for preventing leakage of fluid along a circumferential surface of a rotation shaft. The shaft seal is, for example, used for compressors. The shaft seal includes a rubber seal element, which is ring-shaped to fit on the shaft of a compressor.

Refrigeration compressors include parts that slide against one another. The sliding parts are lubricated by a lubricant that circulates in the compressor with a refrigerant. However, when a compressor is first started, especially a refrigeration compressor, an insufficient amount of lubricant is supplied between the seal element and the shaft surface. Thus, the sliding contact between the shaft and the seal element abnormally wears the seal element. The wear lowers the sealing function of the shaft seal and shortens the life of the shaft seal.

### SUMMARY OF THE INVENTION

The objective of the present invention is to provide a compressor with a shaft seal having high performance and long life of sealing function.

To achieve the above objective, the present invention provides a shaft seal for sealing about the circumferential surface of a drive shaft. A ring-shaped seal member is fitted on the drive shaft so that leakage of fluid along the circumferential surface of the drive shaft is prevented. The seal member has an annular lip that is urged toward the circumferential surface. A solid lubricant layer is provided between the annular lip and the circumferential surface.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is cross-sectional view of a compressor according to a first embodiment;
Fig. 1(a) is an enlarged cross-sectional view of the shaft seal of Fig. 1;
Fig. 2 is an enlarged cross-sectional view of the shaft seal before it is installed on a driveshaft;
Fig. 3(a) is a front elevation view of a lip ring, which is made of fluoroplastic and coated by a solid lubricant layer;
Fig. 3(b) is a front elevation view of the lip ring of Fig. 3(a) when a spiral groove has been formed on the lip ring;
Fig. 4 is a partial enlarged cross-sectional view of a shaft seal according to a second embodiment;
Fig. 5 is a partial enlarged cross-sectional view of a shaft seal according to a third embodiment;
Fig. 6 is a partial enlarged cross-sectional view of a shaft seal according to a fourth embodiment; and
Fig. 7 is a partial enlarged cross-sectional view of a shaft seal according to a fifth embodiment.

### DETAILED DESCRIPTION OF THE PREFERRED EMBODIMENTS

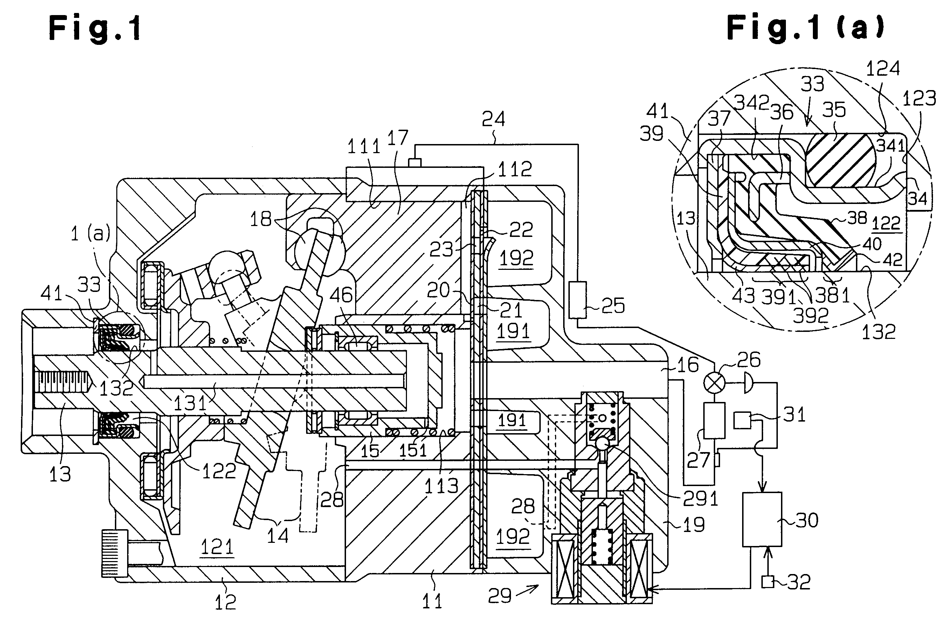

A variable displacement compressor according to a first embodiment of the present invention will now be described in reference to Figs. 1-3.

As shown in Fig. 1, a front housing 12 and a rear housing 19 are joined to a cylinder block 11. A control chamber 121 is formed in the front housing 12. A vehicle engine (E) rotates a drive shaft 13, which is supported between the cylinder block 11 and the front housing 12. In the control chamber 121, a swash plate 14 is supported to rotate integrally with the drive shaft 13 and to incline with respect to the drive shaft 13. The swash plate 14 moves between a maximum inclination position, which is shown by a full line in Fig. 1, and a minimum inclination position, which is shown by broken line in Fig. 1.

The cylinder block 11 includes cylinder bores 111. Each cylinder bore 111 accommodates a piston 17. Each piston 17 defines a compression chamber 112 in the associated cylinder bore 111. Each piston 17 is coupled to a swash plate 14 through a pair of shoes 18. To compress refrigerant gas, the rotation of the swash plate 14 is converted to reciprocation of each piston 17 through the shoes 18. The rear housing 19 includes an intake chamber 191 and a discharge chamber 192. When the piston 17 moves from the top dead center to the bottom dead center, refrigerant is drawn from the intake chamber 191 to the compression chamber 112 through an intake port 21, which opens a flexible intake valve 20. When the piston 17 moves from the bottom dead center to the top dead center, refrigerant compressed in the compression chamber is discharged into the discharge chamber 192 through a discharge port 23, which opens a flexible discharge valve 22.

An intake passage 16, which draws refrigerant gas into the compressor, is formed in the rear housing 19. The intake passage 16 is connected to the discharge chamber 192 through an external refrigerant circuit 24. The external refrigerant circuit 24 includes a condenser 25, an expansion valve 26, and an evaporator 27. The expansion valve 26 controls the flow amount of refrigerant through the circuit 24 in accordance with changes of temperature in the evaporator 27.

An accommodation chamber 113 is formed in the center of the cylinder block 11. The intake chamber 191 is connected to the intake passage 16 through the accommodation chamber 113. A cylindrical shutter 15 is slidably fitted in the accommodation chamber 113. The shutter 15 supports the rear end of the drive shaft 13 through a bearing 46. The shutter 15 moves axially with the inclination of the swash plate 14. That is, when the swash plate 14 is at the minimum inclination position shown by the broken line in Fig. 1, the shutter 15 moves axially to close the intake passage 16. That is, the right end of the shutter 15 (as viewed in Fig. 1) abuts against the exit of the passage 16 to seal it. On the other hand, when the swash plate is at the maximum inclination position shown by the solid line in Fig. 1, the shutter 15 is axially spaced from the exit thus opening the intake passage 16.

The compressor further includes an electromagnetic valve 29. A supply passage 28, which connects the discharge chamber 192 to the control chamber 121, supplies refrigerant from the discharge chamber 192 to the control chamber 121. The electromagnetic valve 29 is located in the middle of the supply passage 28. A controller 30 controls magnetizing and demagnetizing the electromagnetic valve 29 in accordance with the temperature of a passenger compartment, which is detected by a temperature detector 31, and a target temperature set by a temperature adjuster 32.

The refrigerant in the control chamber 121 flows to the intake chamber 191 through a passage 131 in the drive shaft 13, the inside of the shutter 15, a restricting passage 151 in the shutter 15, and the accommodation chamber 113. As shown in Fig. 1, when the electromagnetic valve 29 is excited, a valve body 291 closes the supply passage 28. In this state, the refrigerant in the discharge chamber 192 does not flow to the control chamber 121 and the refrigerant in the control chamber 121 flows to the intake chamber 191 through the passage 131. Accordingly, the control pressure in the control chamber 121 is reduced and the difference between the control pressure and the intake pressure in the intake chamber 191 becomes small, thus increasing the inclination of the swash plate 14. On the other hand, when the electromagnetic valve is not excited, the valve body 291 opens the supply passage 28. In this state, the refrigerant in the discharge chamber 192 flows to the control chamber 121. Accordingly, the control pressure in the control chamber increases and the difference between the control pressure and the intake pressure increases, thus reducing the inclination of the swash plate 14. When the swash plate 14 is at its minimum inclination position, the shutter 15 closes the intake passage 16. Then, the flow of refrigerant from the intake passage 16 to the intake chamber 191 through the accommodation chamber 113 is stopped. Accordingly, little or no refrigerant is discharged from the compressor to the external refrigerant circuit 24.

A seal chamber 122 for a ring-shaped seal is formed in the front housing 12 at a position corresponding to the circumferential surface of the front end of the drive shaft 13. A shaft seal 33 is accommodated in the seal chamber 122.

As shown in Fig. 1a, the shaft seal 33 includes a ring case 34, a rubber seal ring 35, which is fitted in an outer annular recess 341 formed about the ring case 34, a pair of ring-shaped metal retainers 36, 37 located inside the ring case 34, a first rubber lip ring 38 retained in the retainer 36, a second fluororesin lip ring 39 retained in the retainer 37, and a ring-shaped metal retainer 40. The second lip ring 39 is, for example, made of polytetrafluoroethylene. The ring case 34 contacts an inner wall 123 and is retained in the accommodation chamber 122 by a snap ring 41. The seal ring 35 is held in contact with the outer annular recess 341 and a cylindrical surface 124 of the seal chamber 122. The circumferential rims of the retainers 36, 37, the first lip ring 38, and the second lip ring 39 are retained in an iner annular recess 342 inside the ring case 34. The retainer 40 is located between the first lip ring 38 and the second lip ring 39.

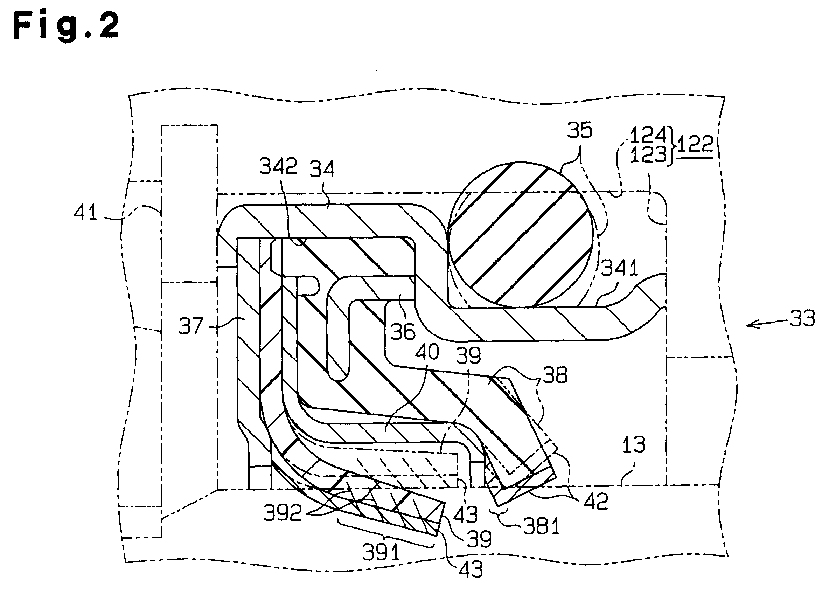

Fig. 2 shows the shaft seal 33 prior to installation on the drive shaft 13. As shown in Fig. 1(a), when the shaft seal 33 is fitted on the drive shaft 13, the inner circumferential portions of the first lip ring 38 and the second lip ring 39 contact the circumferential surface 132 of the drive shaft 13. A first solid lubricant layer 42 is attached to a sliding contact portion 381 of the first lip ring 38, which slides on the circumferential surface of the drive shaft 13. A second solid lubricant layer 43 is attached to a sliding contact portion 391 of the second lip ring 39, which slides on the circumferential surface 132 of the drive shaft 13.

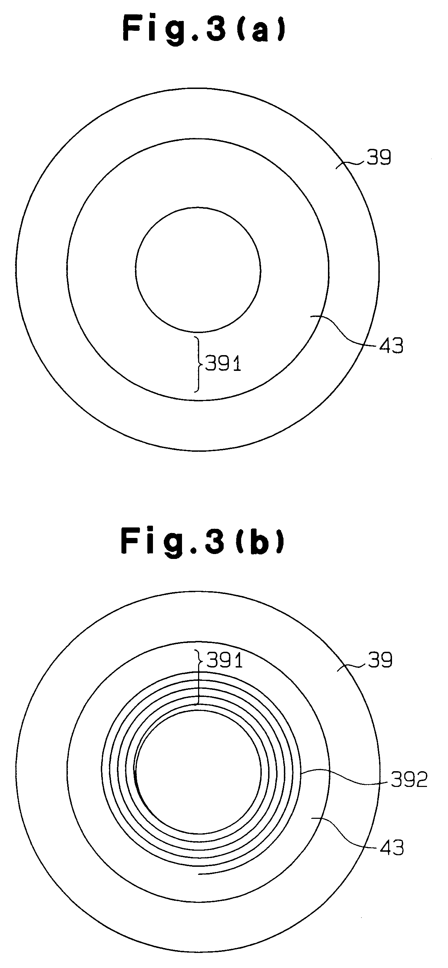

As shown in Fig. 3(b), the sliding contact portion 391 of the second lip ring 39 includes a spiral groove 392. As shown in Fig. 3(a), the second lip ring 39 is a flat ring prior to installation on the shaft seal 33. As shown in Fig. 3(a), after the solid lubricant layer 43 is attached to the flat second lip ring 39, the spiral groove 392 is formed as shown in Fig. 3(b). The spiral groove 392 functions to return lubricant oil, which would otherwise leak from the control chamber 121 along the circumferential surface 132 of the drive shaft 13 to the exterior of the compressor.

The solid lubricant layers 42, 43 are made of a mixture that includes molybdenum disulfide, graphite, and polyamideimide thermosetting resin. Molybdenum disulfide and graphite are excellent solid lubricants and polyamideimide thermosetting resin function as adhesive. Before assembling the shaft seal 33, the mixture is applied on the sliding contact portion 381 of the first lip ring 38 and the sliding contact portion 391 of the second lip ring 39 and is dried, thus forming the solid lubricant layers 42, 43. The mixture is applied using spraying or pad printing.

The solid lubricant material may be one of or a combination of a polymer (such as ethylenetetrafluoride), molybdenum desulfide, graphite, tungsten disulfide, lead oxide, boron nitride, and a soft metal (such as lead, gold, indium, tin). Polyamideimide thermosetting resin may be used as adhesive. The soft metals such as lead, gold, indium, and tin may be plated.

The present invention has the following advantages.
(1) The first lip ring 38 and the second lip ring 39, which contact the circumferential surface 132 of the drive shaft 13, prevent leakage of refrigerant from the control chamber 121 along the surface 132. The seal ring 35 prevents leakage of refrigerant from the control chamber 121 along the inner surface 124 of the seal chamber 122.
   Lubricant oil occupies the control chamber 121 after the installation of the compressor. However, when the compressor is initially operated after the installation, the supply of lubricant oil in the seal chamber 122 is inadequate. Therefore, there is not enough lubrication between the drive shaft 13 and the sliding contact portions of the first and second lip rings 38, 39.
   If the solid lubricant layer 42, 43 were not provided, the first and the second lip rings 38, 39 are more likely to wear. The solid lubricant layers 42, 43 prevent abnormal wear of the lip rings 38, 39. This maintains the function of the shaft seal 33 and extends the life of the seal 33.
(2) The control pressure in the control chamber 121 greatly fluctuates. The control pressure presses the first lip ring 38 to the surface 132 of the drive shaft 13. Accordingly, without sufficient lubrication and the solid lubricant layer 42, abnormal wear of the first lip ring 38 is likely to be caused by high control pressures. This is prevented by the solid lubricant layer 42 in the present embodiment. Accordingly, the shaft seal 33 having the solid lubricant layer 42 is suitable for variable displacement compressors.
(3) The second lip ring 39 has a wider contact area with the surface of the drive shaft 13 than the first lip ring 38 and thus generates more heat from friction. The second solid lubricant layer 43 reduces the generation of heat at the sliding contact portion of the second lip ring 39, which reduces deterioration of the adjacent first lip ring 38.

The present invention will further be embodied as follows.

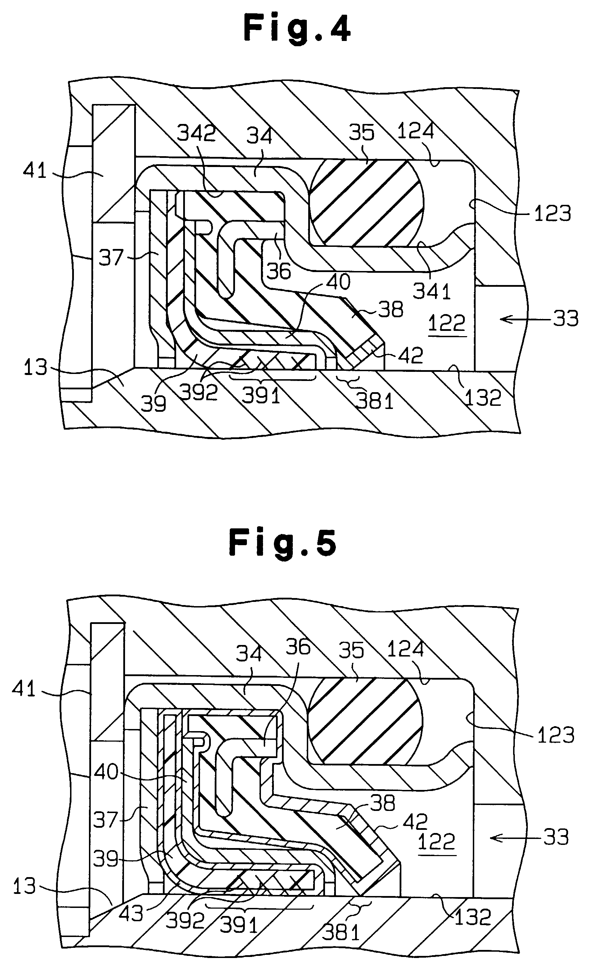

The second lip ring 39 is made of fluororesin and is less likely to wear than the first lip ring 38, which is made of rubber. However, the rubber first lip ring 38 primarily seals the control chamber 121. Therefore, the sealing function of the shaft seal 33 is affected more by wear of the first lip ring 38 than by wear of the second lip ring 39. As shown in a second embodiment of Fig. 4, the first solid lubricant layer 42 may be provided only on the first lip ring 38. In this case, wear is postponed for relatively long time.

Further, the solid lubricant layer 42 may be provided only on the second lip ring 39. In this case, the wear of the second lip ring 39 and heat generation of the sliding contact portion 391 of the second lip ring 39 are reduced. As a result, deterioration of the adjacent first lip ring 38 is reduced and the life of the shaft seal 33 is extended.

In a third embodiment shown in Fig. 5, the solid lubricant layer 42 is applied to the whole surface of the first lip ring 38. Further, the solid lubricant layer 43 is applied to the whole surface of the second lip ring 39.

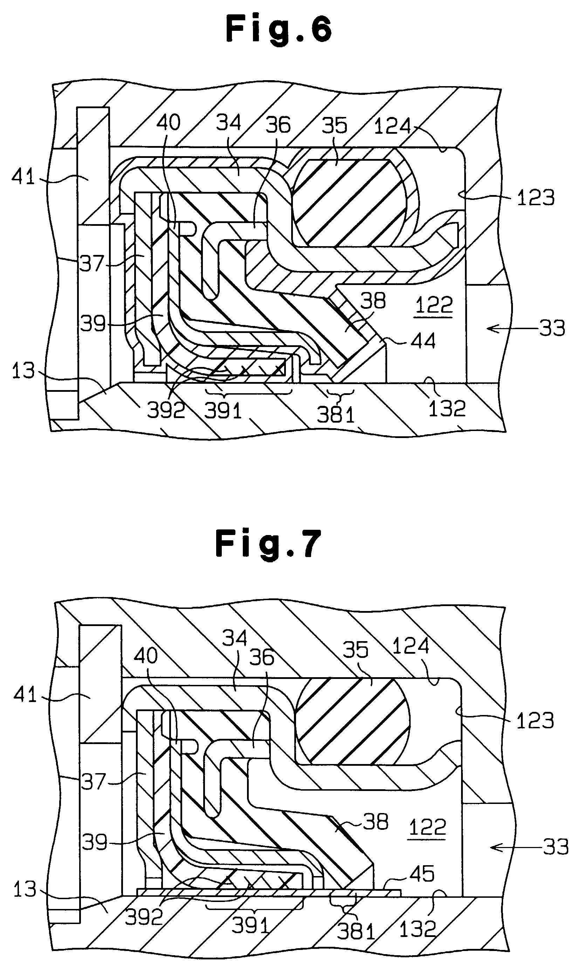

In a fourth embodiment shown in Fig. 6, the solid lubricant layer 44 is applied to the whole surface of the shaft seal 33 after its assembly.

In a fifth embodiment shown in Fig. 7, a rotating solid lubricant layer 45 is provided on the circumferential surface 132 of the drive shaft 13 along a section contacting the first and the second lip rings 38, 39. The rotating solid lubricant layer 45 is preferably tin plating. When the compressor is initially operated (with insufficient oil on the seal), the rotating solid lubricant layer 45 prevents the first and the second lip rings 38, 39 from abnormally wearing. Also, the solid lubricant layer 45 reduces the heat generated by the second lip ring 39 and thus delays the deterioration of the adjacent first lip ring 38.

The rotating solid lubricant layer 45 may be provided only on the section of the circumferential surface 132 contacting the first lip ring 38 or only on that contacting the second lip ring 39.

Instead of tin plating, the rotating solid lubricant layer 45 on the drive shaft 13 may be made of the same material as the solid lubricant layers 42, 43 on the lip rings 38, 39, that is, a mixture of molybdenum disulfide, graphite lubricant, and polyamideimide thermosetting resin.

The rotating solid lubricant layer 45 may be provided on the whole circumferential surface 132 of the drive shaft 13. That is, the rotating solid lubricant layer 45 may be provided on the circumferential surface 132 contacting the swash plate 14 and contacting the bearing 46 in the shutter 15.

In the shaft seals 33 shown in Figs. 2, 4, 5, 6, which have solid lubricant layers 42, 44, 43, the rotating solid lubricant layer 45, as shown in Fig. 7, may further be provided on the drive shaft 13. In this case, the solid lubricant layers 42, 43, 44, which are made of a mixture of molybdenum disulfide, graphite, polyamideimide thermosetting resin, make sliding contact with the rotating solid lubricant layer 45, which is tin plating. The sliding contact between solid lubricant layers having different compositions prevents fusion adherence during sliding, and the reliability and durability of the shaft seal 33 are improved.

The shaft seals of the present invention may be located between the shaft and any part inside a compressor and the seals may be used with any type of compressor.

The application of the present invention is not limited to compressors. The present invention is applied to any apparatus where there is a need to prevent leakage of fluid along a drive shaft.

It should be apparent to those skilled in the art that the present invention may be embodied in many other specific forms without departing from the spirit or scope of the invention. Therefore, the present examples and embodiments are to be considered as illustrative and not restrictive and the invention is not to be limited to the details given herein, but may be modified within the scope and equivalence of the appended claims.

A shaft seal (33) is installed on the circumferential surface (!32)of a drive shaft (13). A first lip ring (38) made of rubber and a second lip ring (39) made of fluororesin are urged toward the drive shaft (33) to prevent leakage of fluid along the circumferential surface of the drive shaft (13). Each lip has a contact portion (381, 391) facing the circumferential surface of the drive shaft (33). A solid lubricant layer (42, 43) is provided on the contact portions (381, 391) to reduce friction and to extend the life of the seal (33). The solid lubricant may also be formed on the surface of the drive shaft (13).

## Claims

1. A shaft seal for sealing about the circumferential surface (132) of a rotation shaft (13), the shaft seal (33) comprising:
a ring-shaped seal member (38, 39) fitted on the rotation shaft so that leakage of fluid along the circumferential surface of the rotation shaft is prevented, wherein the seal member has an annular lip (381, 391) that is urged toward the circumferential surface, and the shaft seal being characterized by
a solid lubricant layer (42, 43, 45), which is provided between the annular lip and the circumferential surface.

2. The shaft seal according to claim 1 characterized in that the solid lubricant layer (42, 43) is formed on the annular lip.

3. The shaft seal according to claim 1 characterized in that the solid lubricant layer (42, 43) is made of a mixture of molybdenum disulfide, graphite, and thermosetting resin.

4. The shaft seal according to claim 1 characterized in that the solid lubricant layer (45) is formed on the circumferential surface of the rotation shaft contacting the seal member.

5. The shaft seal according to claim 4 characterized in that the solid lubricant layer (45) includes tin.

6. The shaft seal according to claim 4 characterized in that a layer (42, 43) of solid lubricant (45) is also formed on the annular lip, and wherein the solid lubricant layer (45) on the rotation shaft is made of a material different from that of the solid lubricant layer (42, 43) on the annular lip.

7. The shaft seal according to any one of claims 1 to 6 characterized in that the seal member includes a first annular lip (381) made of rubber and a second annular lip (391) made of fluororesin, wherein the solid lubricant layer (42, 43) is formed on at least one of the first and the second annular lips.

8. A compressor having the shaft seal according to any one of claims 1 to 6 , the compressor being characterized by:
a housing having a fluid chamber for accommodating the fluid, where in the rotation shaft is rotatably supported in the housing, and extends from the fluid chamber to the exterior of the housing, where in the shaft seal is located between the rotation shaft and the housing to prevent leakage of fluid from the fluid chamber.

9. The compressor according to claim 8 characterized in that the seal member includes a first annular lip (381) made of rubber and a second annular lip (391) made of fluororesin.

10. The compressor according to claim 9 characterized by that the second annular lip includes a spiral groove, wherein the spiral groove returns fluid leaking from the fluid chamber.
